# EUROPEAN PATENT APPLICATION

(11) **EP 4 819 209 A1**
(43) Date of publication of application: **07.10.2026**
(21) Application number: 25900883.7
(22) Date of filing: 12.11.2025
(51) Int. Cl.: H01M 4/04, G01B 21/02, H01M 10/04

(54) **ELECTRODE MONITORING SYSTEM AND SECONDARY BATTERY MANUFACTURING APPARATUS COMPRISING SAME**

(30) Priority: 03.12.2024 KR 20240177055
(71) Applicant: LG Energy Solution, Ltd., Seoul 07335 (KR)
(72) Inventor: KANG, Ji Hyeon, Daejeon 34122 (KR); KIM, Jae Hyun, Daejeon 34122 (KR)
(74) Representative: Goddar, Heinz J.
(86) International application number: PCT/KR2025/018649
(87) International publication number: WO 2026/121617

(57) **Abstract**

According to exemplary embodiments, an electrode monitoring system is provided. The electrode monitoring system may include: a positive electrode sensor configured to measure the thickness of a traveling positive electrode; a negative electrode sensor configured to measure the thickness of a traveling negative electrode; a control part configured to process measurement data from the positive electrode sensor and the negative electrode sensor; and a display connected to the control part and configured to display the measurement data from the positive electrode sensor and the negative electrode sensor.

## Description

### [Technical Field]

The present disclosure relates to an electrode monitoring system and a secondary battery manufacturing device including the same. This application claims the benefit of Korean Patent Application No. 10-2024-0177055, filed on December 3, 2024, the disclosure of which is incorporated herein by reference.

### [Background]

Unlike primary batteries, secondary batteries are capable of repeated charging and discharging. Secondary batteries are widely used as energy sources for various wireless devices such as handsets, laptops, and cordless vacuum cleaners. In recent years, due to improvements in energy density and economies of scale, the manufacturing cost per unit capacity of secondary batteries has dramatically decreased, and the driving range of battery electric vehicles (BEVs) has increased to a level comparable to that of fuel-powered vehicles. As a result, the primary application of secondary batteries has shifted from mobile devices to mobility.

The manufacture of secondary batteries includes an electrode process including mixing, coating, roll pressing, slitting, and notching processes; an assembly process in which an electrode assembly is housed in a case; and an activation process in which battery cells are electrically activated and stabilized. After the activation process, battery cells may be stacked to form a cell stack. The cell stack may be mounted in a housing together with a module frame, or may be mounted directly in the housing without a module frame.

Unit cells of secondary batteries are classified as cylindrical, prismatic, or pouch-types depending on the type of case. In the case of a cylindrical battery, an insulating separator is interposed between a positive electrode and a negative electrode coated with active materials, which is wound to form a jelly-roll type electrode assembly, which is then inserted into a battery can to form a battery.

### [Summary]

### [Technical Problem]

The technical problem to be solved by the technical concept of the present disclosure is to provide an electrode monitoring system capable of monitoring and tracking the thicknesses of electrodes during the secondary battery manufacturing process.

### [Technical Solution]

According to exemplary embodiments of the present disclosure for solving the above-described problem, an electrode monitoring system may be provided. The electrode monitoring system may include: a positive electrode sensor configured to measure the thickness of a traveling positive electrode; a negative electrode sensor configured to measure the thickness of a traveling negative electrode; a control part configured to process measurement data from the positive electrode sensor and the negative electrode sensor; and a display connected to the control part and configured to display the measurement data from the positive electrode sensor and the negative electrode sensor.

The positive electrode sensor may be configured to measure the thickness of the positive electrode in real time. The negative electrode sensor may be configured to measure the thickness of the negative electrode in real time.

The display may be configured to: display, in a graph, the thickness of the negative electrode according to the travel length of the negative electrode; and display, in a graph, the thickness of the positive electrode according to the travel length of the positive electrode.

The graph may be a line graph.

The control part may be configured to: determine a region where the thickness of the positive electrode is 0.030 mm or less as an non-coated part, determine a region where the thickness of the positive electrode is greater than 0.030 mm and 0.090 mm or less as a single-side coated part, and determine a region where the thickness of the positive electrode is greater than 0.090 mm and 0.130 mm or less as a coated part; and determine a region where the thickness of the negative electrode is 0.030 mm or less as an non-coated part, determine a region where the thickness of the negative electrode is greater than 0.030 mm and 0.090 mm or less as a single-side coated part, and determine a region where the thickness of the negative electrode is greater than 0.090 mm and 0.130 mm or less as a coated part.

The control part may be configured to calculate the maximum value, minimum value, and average value of the thickness of the coated part of the positive electrode, and the maximum value, minimum value, and average value of the thickness of the coated part of the negative electrode.

The control part may be configured to: divide the coated part of the positive electrode into a plurality of sections in the travel direction; and divide the coated part of the negative electrode into a plurality of sections in the travel direction.

The display may be configured to display, in a graph, the thickness of the negative electrode according to its position in the travel direction for each of the plurality of sections of the coated part of the negative electrode. The display may be configured to display, in a graph, the thickness of the positive electrode according to its position in the travel direction for each of the plurality of sections of the coated part of the positive electrode.

The display may be configured to: display the graphs for each of the plurality of sections of the coated part of the negative electrode superimposed on a single coordinate plane. The display may be configured to display the graphs for each of the plurality of sections of the coated part of the positive electrode superimposed on a single coordinate plane.

The control part may be configured to calculate the average value of the thickness of the negative electrode for each of the plurality of sections of the coated part of the negative electrode. The control part may be configured to calculate the average value of the thickness of the positive electrode for each of the plurality of sections of the coated part of the positive electrode.

The electrode monitoring system may further include a memory configured to store data processed by the control part.

According to exemplary embodiments of the present disclosure for solving the above-described problem, a secondary battery manufacturing device may be provided. The secondary battery manufacturing device may include: a positive electrode unwinder that supplies a positive electrode; a negative electrode unwinder that supplies a negative electrode; a separator unwinder that supplies a separator; a rewinder that winds the positive electrode, the separator, and the negative electrode; a positive electrode sensor configured to measure the thickness of the positive electrode between the positive electrode unwinder and the rewinder; a negative electrode sensor configured to measure the thickness of the negative electrode between the negative electrode unwinder and the rewinder; a control part configured to process measurement data from the positive electrode sensor and the negative electrode sensor; and a display connected to the control part and configured to display the measurement data.

The display may be configured to display the thickness of the positive electrode according to the travel length of the positive electrode. The display may be configured to display the thickness of the negative electrode according to the travel length of the negative electrode.

The control part may be configured to divide the coated part of the positive electrode into a plurality of sections in the travel direction and calculate the average value of the thickness of the positive electrode in each of the plurality of sections. The control part may be configured to divide the coated part of the negative electrode into a plurality of sections in the travel direction and calculate the average value of the thickness of the negative electrode in each of the plurality of sections.

The control part is configured to: calculate the maximum value, minimum value, and average value of the thickness of the coated part of the positive electrode; and calculate the maximum value, minimum value, and average value of the thickness of the coated part of the negative electrode.

### [Advantageous Effects]

According to exemplary embodiments of the present disclosure, by visualizing information on the thicknesses of the positive electrode and the negative electrode on a single display during the secondary battery manufacturing process, the state of the electrodes can be monitored in real time. In addition, by storing thickness information of the electrodes, the cause of defects can be quickly identified when defects occur in subsequent processes.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a schematic diagram illustrating an electrode monitoring system according to exemplary embodiments.
FIG. 2 is a schematic diagram illustrating a secondary battery manufacturing device according to exemplary embodiments.
FIG. 3 is a schematic diagram illustrating a positive electrode and a positive electrode sensor according to exemplary embodiments.
FIG. 4 is a schematic diagram illustrating a negative electrode and a negative electrode sensor according to exemplary embodiments.
FIG. 5 is a schematic diagram illustrating a positive electrode according to exemplary embodiments.
FIG. 6 is a schematic diagram illustrating a negative electrode according to exemplary embodiments.
FIG. 7 is a schematic diagram illustrating a display according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First and Second Embodiments)

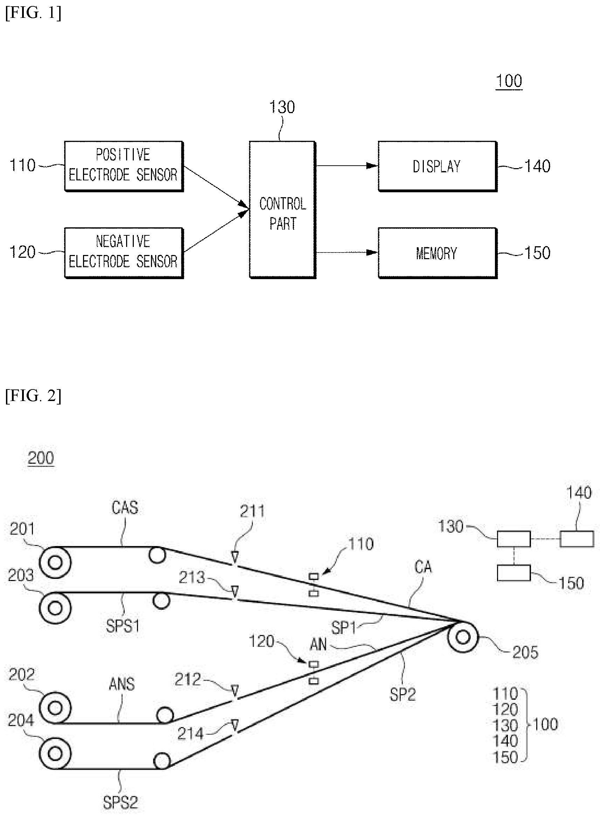

FIG. 1 is a schematic diagram illustrating an electrode monitoring system 100 according to exemplary embodiments. FIG. 2 is a schematic diagram illustrating a secondary battery manufacturing device 200 according to exemplary embodiments.

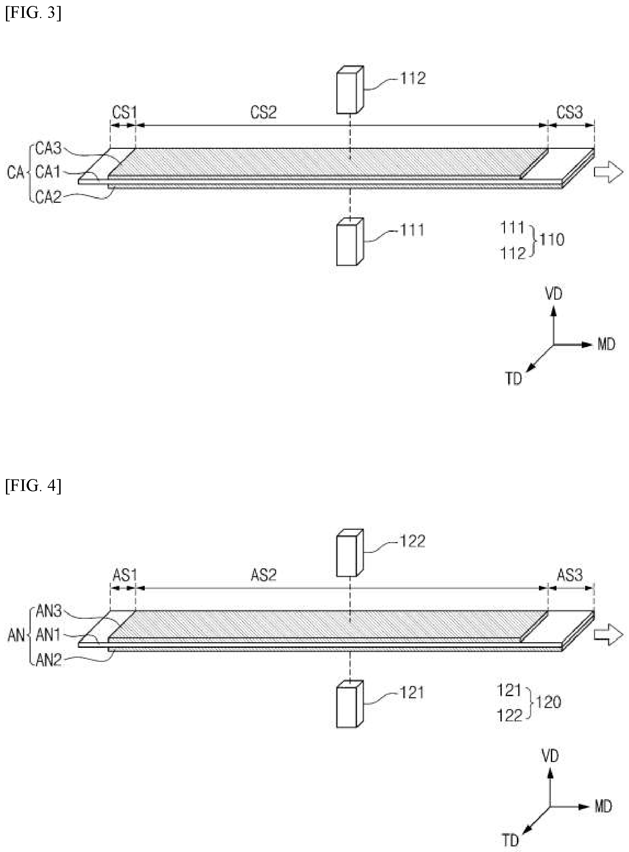

FIG. 3 is a schematic diagram illustrating a positive electrode CA and a positive electrode sensor 110 according to exemplary embodiments. FIG. 4 is a schematic diagram illustrating a negative electrode AN and a negative electrode sensor 120 according to exemplary embodiments.

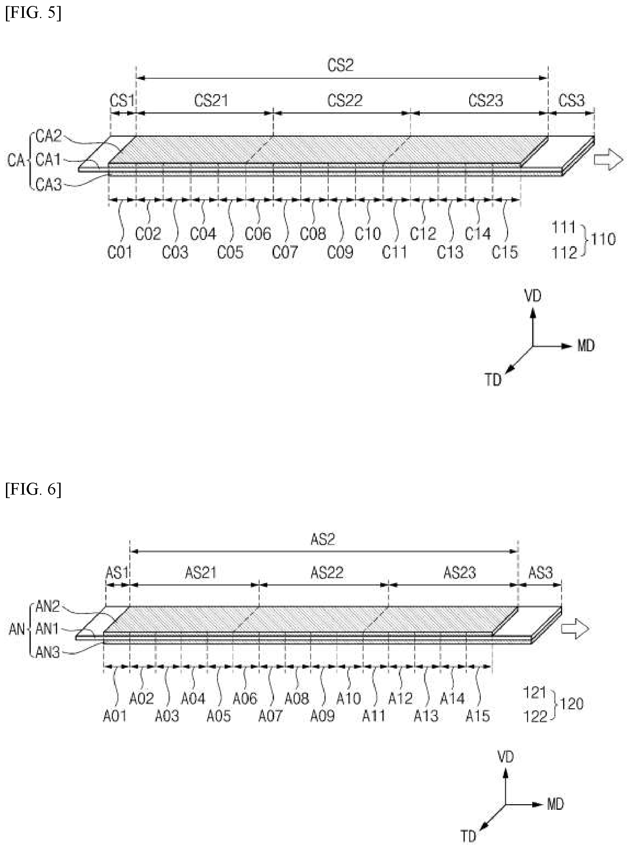

FIG. 5 is a schematic diagram illustrating a positive electrode CA according to exemplary embodiments. FIG. 6 is a schematic diagram illustrating a negative electrode AN according to exemplary embodiments.

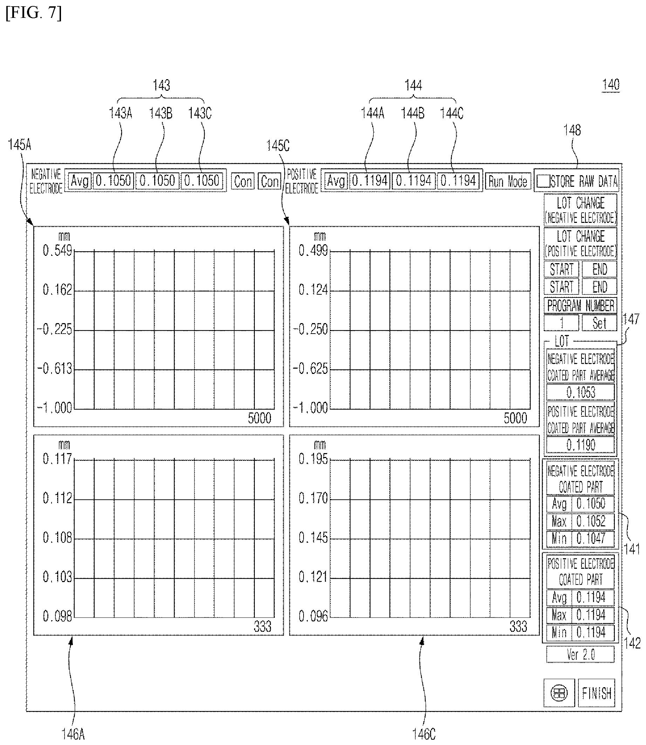

FIG. 7 is a schematic diagram illustrating a display 140 according to exemplary embodiments.
First, referring to FIGS. 1 and 2, the electrode monitoring system 100 may include a positive electrode sensor 110, a negative electrode sensor 120, a control part 130, a display 140, and a memory 150. The electrode monitoring system 100 may be configured to monitor the thicknesses of electrodes CA, AN during the secondary battery manufacturing process. The electrode monitoring system 100 may be incorporated into processes such as manufacturing, transportation, assembly, or inspection of electrodes CA, AN.

As a non-limiting embodiment, the electrode monitoring system 100 may be incorporated into the secondary battery manufacturing device 200 in a winding process. In the following, the description will focus on the secondary battery manufacturing device 200 and the electrode monitoring system 100 included therein.

The secondary battery manufacturing device 200 may include a positive electrode unwinder 201, a negative electrode unwinder 202, separator unwinders 203, 204, a rewinder 205, cutting parts 211, 212, 213, 214, and the electrode monitoring system 100.

The positive electrode unwinder 201 may be configured to provide a positive electrode sheet CAS. The positive electrode sheet CAS may be wound on the positive electrode unwinder 201. A lot-unit positive electrode sheet CAS may be unwound by the positive electrode unwinder 201. The unwound positive electrode sheet CAS may move toward the rewinder 205.

The positive electrode cutting part 211 may cut the lot-unit positive electrode sheet CAS into a plurality of pattern-unit positive electrodes CA. A pattern-unit positive electrode CA refers to a positive electrode having a length required to manufacture one jelly-roll type electrode assembly. According to exemplary embodiments, the lot-unit positive electrode sheet CAS may be cut into approximately 500 to 2,000 pattern-unit positive electrodes CA. The positive electrode cutting part 211 may be located between the positive electrode unwinder 201 and the rewinder 205.

Referring also to FIG. 3, the pattern-unit positive electrode CA may include a current collector CA1, a first active material layer CA2, and a second active material layer CA3. The first active material layer CA2 may be on one surface of the current collector CA1. The second active material layer CA3 may be on the other surface of the current collector CA1.

According to exemplary embodiments, the current collector CA1 may be an aluminum foil. According to exemplary embodiments, each of the first and second active material layers CA2, CA3 may include one or more of LiCoO₂, LiNiO₂, LiNi₁₋ₓCoₓO₂(0.2≤x≤0.5), LiNi_{1/3}Mn_{1/3}Co_{1/3}O₂, LiNi_{0.5}Mn_{0.5}O₂, LiMn₂O₄, LiMn₂₋ₓMₓO₄ (M is Al or Li, etc.), and LiFePO₄.

The positive electrode CA may include a non-coated part CS1, a coated part CS2, and a single-side coated part CS3. The non-coated part CS1 refers to a region where the first and second active material layers CA2, CA3 are not coated. In the non-coated part CS1, the current collector CA1 may be exposed. The coated part CS2 may be a region where both surfaces of the current collector CA1 are coated with the first and second active material layers CA2, CA3, respectively. The single-side coated part CS3 may be a region where one surface of the current collector CA1 is coated by the first active material layer CA2 and the other surface of the current collector CA1 is exposed.

The negative electrode unwinder 202 may be configured to provide a negative electrode sheet ANS. The negative electrode sheet ANS may be wound on the negative electrode unwinder 202. A lot-unit negative electrode sheet ANS may be unwound by the negative electrode unwinder 202. The unwound negative electrode sheet ANS may move toward the rewinder 205.

The negative electrode cutting part 212 may cut the lot-unit negative electrode sheet ANS into a plurality of pattern-unit negative electrodes AN. A pattern-unit negative electrode AN refers to a negative electrode having a length required to manufacture one jelly-roll type electrode assembly. According to exemplary embodiments, the lot-unit negative electrode sheet ANS may be cut into approximately 500 to 2,000 pattern-unit negative electrodes AN. The negative electrode cutting part 212 may be located between the negative electrode unwinder 202 and the rewinder 205.

Referring also to FIG. 4, the pattern-unit negative electrode AN may include a current collector AN1, a first active material layer AN2, and a second active material layer AN3. The first active material layer AN2 may be on one surface of the current collector AN1. The second active material layer AN3 may be on the other surface of the current collector AN1.

According to exemplary embodiments, the current collector AN1 may be a copper foil or a nickel foil. According to exemplary embodiments, each of the first and second active material layers AN2, AN3 may include lithium metal, graphite, coke, silicon, or tin.

The negative electrode AN may include a non-coated part AS1, a coated part AS2, and a single-side coated part AS3. The non-coated part AS1 refers to a region where the first and second active material layers AN2, AN3 are not coated. In the non-coated part AS1, the current collector AN1 may be exposed. The coated part AS2 may be a region where both surfaces of the current collector AN1 are coated with the first and second active material layers AN2, AN3, respectively. The single-side coated part AS3 may be a region where one surface of the current collector AN1 is coated by the first active material layer AN2 and the other surface of the current collector AN1 is exposed.

The separator unwinder 203 may be configured to provide a separator sheet SPS1. The separator sheet SPS1 may be wound on the separator unwinder 203. A lot-unit separator sheet SPS1 may be unwound by the separator unwinder 203. The unwound separator sheet SPS1 may move toward the rewinder 205.

The separator unwinder 204 may be configured to provide a separator sheet SPS2. The separator sheet SPS2 may be wound on the separator unwinder 204. A lot-unit separator sheet SPS2 may be unwound by the separator unwinder 204. The unwound separator sheet SPS2 may move toward the rewinder 205.

The separator cutting part 213 may cut the lot-unit separator sheet SPS1 into a plurality of pattern-unit separators SP1. A pattern-unit separator SP1 refers to a separator having a length required to manufacture one jelly-roll type electrode assembly. According to exemplary embodiments, the lot-unit separator sheet SPS1 may be cut into approximately 500 to 2,000 pattern-unit separators SP1. The separator cutting part 213 may be located between the separator unwinder 203 and the rewinder 205.

The separator cutting part 214 may cut the lot-unit separator sheet SPS2 into a plurality of pattern-unit separators SP2. A pattern-unit separator SP2 refers to a separator having a length required to manufacture one jelly-roll type electrode assembly. According to exemplary embodiments, the lot-unit separator sheet SPS2 may be cut into approximately 500 to 2,000 pattern-unit separators SP2. The separator cutting part 214 may be located between the separator unwinder 203 and the rewinder 205.

The separators SP1, SP2 may physically block contact between the positive electrode CA and the negative electrode AN. According to exemplary embodiments, the separators SP1, SP2 may each include polyethylene, polypropylene, polyolefin, polyvinylidene fluoride (PVdF), or inorganic nanoparticles (SiO₂, TiO₂, Al₂O₃, ZrO₂, etc.).

The positive electrode CA, negative electrode AN, and separators SP1, SP2 may be wound at the rewinder 205 to form a jelly-roll type electrode assembly. In a subsequent process, the jelly-roll type electrode assembly may be inserted into a can and subjected to a process of injecting electrolyte, to be manufactured into a cylindrical battery.

The positive electrode sensor 110 may be configured to measure the thickness of the positive electrode CA moving in the travel direction MD. The positive electrode sensor 110 may be configured to measure the thickness of the positive electrode CA before it is wound on the rewinder 205. The positive electrode sensor 110 may be positioned upstream of the rewinder 205 in the travel direction MD. The positive electrode sensor 110 may be positioned downstream of the positive electrode cutting part 211 in the travel direction MD. According to exemplary embodiments, the position of the positive electrode sensor 110 may be fixed.

According to exemplary embodiments, the positive electrode sensor 110 may be a noncontact sensor. For example, the positive electrode sensor 110 may include a first sensor 111 and a second sensor 112. The first sensor 111 may face the first active material layer CA2. The second sensor 112 may face the second active material layer CA3. The first sensor 111 may be spaced apart from the second sensor 112 in the vertical direction VD with the positive electrode CA therebetween. According to exemplary embodiments, the positive electrode sensor 110 may be a laser sensor or an optical sensor. However, the type and configuration of the positive electrode sensor 110 are not limited thereto and may be variously modified within the ordinary skill in the art.

The positive electrode sensor 110 may be configured to measure the thickness of the positive electrode CA in the vertical direction VD in real time. If necessary, the positive electrode sensor 110 may be configured to measure the thickness of the positive electrode CA in the vertical direction VD at regular intervals. The positive electrode sensor 110 may be configured to continuously measure the thickness of the positive electrode CA in the vertical direction VD along the travel direction MD. The positive electrode sensor 110 may measure the thicknesses in the vertical direction VD of the non-coated part CS1, the coated part CS2, and the single-side coated part CS3 of the positive electrode CA.

The negative electrode sensor 120 may be configured to measure the thickness of the negative electrode AN moving in the travel direction MD. The negative electrode sensor 120 may be configured to measure the thickness of the negative electrode AN before it is wound on the rewinder 205. The negative electrode sensor 120 may be positioned upstream of the rewinder 205 in the travel direction MD. The negative electrode sensor 120 may be positioned downstream of the negative electrode cutting part 212 in the travel direction MD. According to exemplary embodiments, the position of the negative electrode sensor 120 may be fixed.

According to exemplary embodiments, the negative electrode sensor 120 may be a noncontact sensor. For example, the negative electrode sensor 120 may include a first sensor 121 and a second sensor 122. The first sensor 121 may face the first active material layer AN2. The second sensor 122 may face the second active material layer AN3. The first sensor 121 may be spaced apart from the second sensor 122 in the vertical direction VD with the negative electrode AN therebetween. According to exemplary embodiments, the negative electrode sensor 120 may be a laser sensor or an optical sensor. However, the type and configuration of the negative electrode sensor 120 are not limited thereto and may be variously modified within the ordinary skill in the art.

The negative electrode sensor 120 may be configured to measure the thickness of the negative electrode AN in the vertical direction VD in real time. If necessary, the negative electrode sensor 120 may be configured to measure the thickness of the negative electrode AN in the vertical direction VD at regular intervals. The negative electrode sensor 120 may be configured to continuously measure the thickness of the negative electrode AN in the vertical direction VD along the travel direction MD. The negative electrode sensor 120 may measure the thicknesses in the vertical direction VD of the non-coated part AS1, the coated part AS2, and the single-side coated part AS3 of the negative electrode AN.

The control part 130 may be configured to receive and process data from the positive electrode sensor 110 and the negative electrode sensor 120. The control part 130 may be configured to receive thickness data of the positive electrode CA measured by the positive electrode sensor 110. The control part 130 may match thickness data of the positive electrode CA to each position of the positive electrode CA in the travel direction MD. The control part 130 may be configured to receive thickness data of the negative electrode AN measured by the negative electrode sensor 120. The control part 130 may match thickness data of the negative electrode AN to each position of the negative electrode AN in the travel direction MD.

The control part 130 may be configured to classify the non-coated part CS1, the coated part CS2, and the single-side coated part CS3 according to the thickness of the positive electrode CA.

According to exemplary embodiments, the control part 130 may be configured to determine a region where the thickness of the positive electrode CA is approximately 0.030 mm or less as the non-coated part CS1. According to exemplary embodiments, the control part 130 may be configured to determine a region where the thickness of the positive electrode CA is greater than approximately 0.090 mm and 0.130 mm or less as the coated part CS2. According to exemplary embodiments, the control part 130 may be configured to determine a region where the thickness of the positive electrode CA is greater than approximately 0.030 mm and 0.090 mm or less as the single-side coated part CS3.

However, the thickness criteria for determining the non-coated part CS1, coated part CS2, and single-side coated part CS3 of the positive electrode CA are not limited to those described above and may vary depending on the specifications of the positive electrode CA.

The control part 130 may be configured to classify the non-coated part AS1, the coated part AS2, and the single-side coated part AS3 according to the thickness of the negative electrode AN.

According to exemplary embodiments, the control part 130 may be configured to determine a region where the thickness of the negative electrode AN is approximately 0.030 mm or less as the non-coated part AS1. According to exemplary embodiments, the control part 130 may be configured to determine a region where the thickness of the negative electrode AN is greater than approximately 0.090 mm and 0.130 mm or less as the coated part AS2. According to exemplary embodiments, the control part 130 may be configured to determine a region where the thickness of the negative electrode AN is greater than approximately 0.030 mm and 0.090 mm or less as the single-side coated part AS3.

However, the thickness criteria for determining the non-coated part AS1, coated part AS2, and single-side coated part AS3 of the negative electrode AN are not limited to those described above and may vary depending on the specifications of the negative electrode AN.

The control part 130 may be configured to calculate computed values based on measurement data received from the positive electrode sensor 110 and the negative electrode sensor 120. According to exemplary embodiments, the control part 130 may be configured to calculate at least one of the maximum value, minimum value, and average value of the thickness of the coated part CS2 of the positive electrode CA. According to exemplary embodiments, the control part 130 may be configured to calculate at least one of the maximum value, minimum value, and average value of the thickness of the coated part AS2 of the negative electrode AN.

Referring also to FIG. 5, the control part 130 may be configured to divide the coated part CS2 of the positive electrode CA into a plurality of sections C01, C02, C03, C04, C05, C06, C07, C08, C09, C10, C11, C12, C13, C14, C15 and calculate the average value of the thickness of the positive electrode CA in the vertical direction VD for each of the sections C01-C15. According to exemplary embodiments, each of the sections C01-C15 may have substantially the same width in the travel direction MD. In the embodiment of FIG. 5, the control part 130 divides the coated part CS2 into 15 sections, but the number of sections is not limited thereto. In other embodiments, the control part 130 may be configured to divide the coated part CS2 into two or more sections.

The control part 130 may divide the coated part CS2 into a leading part CS21, a central part CS22, and a trailing part CS23. The leading part CS21 may include sections C01-C05. The central part CS22 may include sections C06-C10. The trailing part CS23 may include sections C11-C15. According to exemplary embodiments, the leading part CS21, central part CS22, and trailing part CS23 may have substantially the same width in the travel direction MD. The control part 130 may be configured to calculate the average value of the thickness of the positive electrode CA in the vertical direction VD in each of the leading part CS21, central part CS22, and trailing part CS23.

Referring also to FIG. 6, the control part 130 may be configured to divide the coated part AS2 of the negative electrode AN into a plurality of sections A01, A02, A03, A04, A05, A06, A07, A08, A09, A10, A11, A12, A13, A14, A15 and calculate the average value of the thickness of the negative electrode AN in the vertical direction VD for each of the sections A01-A15. According to exemplary embodiments, each of the sections A01-A15 may have substantially the same width in the travel direction MD. In the embodiment of FIG. 6, the control part 130 divides the coated part AS2 into 15 sections, but the number of sections is not limited thereto. In other embodiments, the control part 130 may be configured to divide the coated part AS2 into two or more sections.

The control part 130 may divide the coated part AS2 into a leading part AS21, a central part AS22, and a trailing part AS23. The leading part AS21 may include sections A01-A05. The central part AS22 may include sections A06-A10. The trailing part AS23 may include sections A11-A15. According to exemplary embodiments, the leading part AS21, central part AS22, and trailing part AS23 may have substantially the same width in the travel direction MD. The control part 130 may be configured to calculate the average value of the thickness of the negative electrode AN in the vertical direction VD in each of the leading part AS21, central part AS22, and trailing part AS23.

The control part 130 may be configured to calculate the average thickness in the vertical direction VD of the coated part of the lot-unit positive electrode sheet CAS based on the thickness data in the vertical direction VD of the coated part CS2 of the pattern-unit positive electrodes CA. According to exemplary embodiments, the average thickness of the coated part of the lot-unit positive electrode sheet CAS may be based on thickness data of the coated parts CS2 of approximately 500 to 2,000 pattern-unit positive electrodes CA.

The control part 130 may be configured to calculate the average thickness in the vertical direction VD of the coated part of the lot-unit negative electrode sheet ANS based on the thickness data in the vertical direction VD of the coated part AS2 of the pattern-unit negative electrodes AN. According to exemplary embodiments, the average thickness of the coated part of the lot-unit negative electrode sheet ANS may be based on thickness data of the coated parts AS2 of approximately 500 to 2,000 pattern-unit negative electrodes AN.

The display 140 may be configured to display data transmitted from the control part 130. The control part 130 may be configured to transmit to the display 140 the data received from the sensors 110 and 120 and the computed values calculated based on the data.

Referring to FIGS. 5 through 7 together, the display 140 may include a plurality of user interface UI elements 141, 142, 143, 144, 145A, 145C, 146A, 146C, 147, and 148.

UI element 141 may be configured to display the average value, maximum value, and minimum value of the thickness of the coated part AS2 of the negative electrode AN in the vertical direction VD. UI element 142 may be configured to display the average value, maximum value, and minimum value of the thickness of the coated part CS2 of the positive electrode CA in the vertical direction VD.

UI element 143 may be configured to display the average value of the thickness in the vertical direction VD for each of the leading part AS21, central part AS22, and trailing part AS23 of the coated part AS2 of the negative electrode AN. UI element 143A displays the average value of the thickness in the vertical direction VD of the leading part AS21 of the negative electrode AN. UI element 143B displays the average value of the thickness in the vertical direction VD of the central part AS22 of the negative electrode AN. UI element 143C displays the average value of the thickness in the vertical direction VD of the trailing part AS23 of the negative electrode AN.

UI element 144 may be configured to display the average value of the thickness in the vertical direction VD for each of the leading part CS21, central part CS22, and trailing part CS23 of the coated part CS2 of the positive electrode CA. UI element 144A displays the average value of the thickness in the vertical direction VD of the leading part CS21 of the positive electrode CA. UI element 144B displays the average value of the thickness in the vertical direction VD of the central part CS22 of the positive electrode CA. UI element 144C displays the average value of the thickness in the vertical direction VD of the trailing part CS23 of the positive electrode CA.

UI element 145A may be configured to visually display the thickness of the negative electrode AN in the vertical direction VD. UI element 145A may display the thickness of the negative electrode AN in the vertical direction VD according to the position of the negative electrode AN in the travel direction MD. UI element 145A may display the thickness of the negative electrode AN in the vertical direction VD according to the travel length of the negative electrode AN. UI element 145A may display the thicknesses in the vertical direction VD of the non-coated part AS1, coated part AS2, and single-side coated part AS3 of the negative electrode AN.

UI element 145A may display the thickness of the negative electrode AN in the vertical direction VD as a graph or chart. As a non-limiting embodiment, UI element 145A may display the thickness of the negative electrode AN in the vertical direction VD as a line graph. In the graph of UI element 145A, the x-axis may represent the position of the negative electrode AN in the travel direction MD and the y-axis may represent the thickness of the negative electrode AN in the vertical direction VD.

UI element 145C may be configured to visually display the thickness of the positive electrode CA in the vertical direction VD. UI element 145C may display the thickness of the positive electrode CA in the vertical direction VD according to the position of the positive electrode CA in the travel direction MD. UI element 145C may display the thickness of the positive electrode CA in the vertical direction VD according to the travel length of the positive electrode CA. UI element 145C may display the thicknesses of the non-coated part CS1, coated part CS2, and single-side coated part CS3 of the positive electrode CA.

UI element 145C may display the thickness of the positive electrode CA in the vertical direction VD as a graph or chart. As a non-limiting embodiment, UI element 145C may display the thickness of the positive electrode CA in the vertical direction VD as a line graph. In the graph of UI element 145C, the x-axis may represent the position of the positive electrode CA in the travel direction MD and the y-axis may represent the thickness of the positive electrode CA in the vertical direction VD.

UI element 146A may be configured to display the thicknesses in the vertical direction VD of the leading part AS21, central part AS22, and trailing part AS23 of the coated part AS2 of the negative electrode AN. UI element 146A may display the thickness of the negative electrode AN in the vertical direction VD according to the position of each of the leading part AS21, central part AS22, and trailing part AS23 in the travel direction MD.

UI element 146A may display the thickness of the negative electrode AN in the vertical direction VD as a graph or chart. As a non-limiting embodiment, UI element 146A may display the thickness of the negative electrode AN in the vertical direction VD as a line graph. UI element 146A may display the thicknesses of the leading part AS21, central part AS22, and trailing part AS23 superimposed on a single coordinate plane. In the graph of UI element 146A, the x-axis may represent the position of each section AS21, AS22, AS23 in the travel direction MD and the y-axis may represent the thickness of the negative electrode AN in the vertical direction VD.

UI element 146C may be configured to display the thicknesses in the vertical direction VD of the leading part CS21, central part CS22, and trailing part CS23 of the coated part CS2 of the positive electrode CA. UI element 146A may display the thickness of the positive electrode CA in the vertical direction VD according to the position of each of the leading part CS21, central part CS22, and trailing part CS23 in the travel direction MD.

UI element 146C may display the thickness of the positive electrode CA in the vertical direction VD as a graph or chart. As a non-limiting embodiment, UI element 146C may display the thickness of the positive electrode CA in the vertical direction VD as a line graph. UI element 146C may display the thicknesses of the leading part CS21, central part CS22, and trailing part CS23 superimposed on a single coordinate plane. In the graph of UI element 146C, the x-axis may represent the position of each section CS21, CS22, CS23 in the travel direction MD and the y-axis may represent the thickness of the positive electrode CA in the vertical direction VD.

UI element 147 displays the average value of the thickness in the vertical direction VD of the coated part of the lot-unit negative electrode sheet ANS and the average value of the thickness in the vertical direction VD of the coated part of the lot-unit positive electrode sheet CAS. The average value of the thickness in the vertical direction VD of the coated part of the lot-unit negative electrode sheet ANS may be calculated based on thickness data of the coated parts AS2 of a plurality of pattern-unit negative electrodes AN. The average value of the thickness in the vertical direction VD of the coated part of the lot-unit positive electrode sheet CAS may be calculated based on thickness data of the coated parts CS2 of a plurality of pattern-unit positive electrodes CA.

UI element 148 may display a storage option for raw data relating to the thicknesses of the negative electrode AN and the positive electrode CA. When the storage option is selected by the user, thickness data for each position in the travel direction MD of the negative electrode AN and the positive electrode CA, and computed values based on the thickness data, may be stored in the memory 150. When the storage option is deselected by the user, the average thickness values for each of the sections A01-A15 of the coated part AS2 of the negative electrode AN and each of the sections C01-C15 of the coated part CS2 of the positive electrode CA may be selectively stored in the memory 150.

The memory 150 may be configured to store data transmitted from the control part 130. The control part 130 may be configured to transmit to the memory 150 the data received from the sensors 110, 120 and the computed values calculated based on the data. According to exemplary embodiments, the memory 150 may be configured to store the average thickness values of the positive electrode CA for each of the sections C01-C15 of the coated part CS2 of the positive electrode CA. According to exemplary embodiments, the memory 150 may be configured to store the average thickness values of the negative electrode AN for each of the sections A01-A15 of the coated part AS2 of the negative electrode AN. According to exemplary embodiments, the memory 150 may be configured to store raw data from each of the positive electrode sensor 110 and the negative electrode sensor 120.

The secondary battery manufacturing device 200 according to exemplary embodiments of the present disclosure can visualize the thicknesses of the positive electrode CA and the negative electrode AN on a single display 140 for real-time monitoring. When the thickness of the positive electrode CA or the negative electrode AN deviates from a set tolerance range, a thickness defect can be detected and a rapid follow-up action can be taken before winding the electrodes CA, AN. When the thickness of the jelly-roll type electrode assembly after winding deviates from a set tolerance range, the thickness data of the electrodes CA, AN before winding stored in the memory 150 can be referenced to identify the cause and location of the defect. Compared to the method of disassembling the electrode assembly and measuring the thickness by section to identify the cause of the defect, the cause and location of the defect can be identified quickly and accurately.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. An electrode monitoring system comprising:
a positive electrode sensor configured to measure the thickness of a traveling positive electrode;
a negative electrode sensor configured to measure the thickness of a traveling negative electrode;
a control part configured to process measurement data from the positive electrode sensor and the negative electrode sensor; and
a display connected to the control part and configured to display the measurement data from the positive electrode sensor and the negative electrode sensor.

2. The electrode monitoring system of claim 1, wherein
the positive electrode sensor is configured to measure the thickness of the positive electrode in real time; and
the negative electrode sensor is configured to measure the thickness of the negative electrode in real time.

3. The electrode monitoring system of claim 1, wherein
the display is configured to:
display, in a graph, the thickness of the negative electrode according to the travel length of the negative electrode; and
display, in a graph, the thickness of the positive electrode according to the travel length of the positive electrode.

4. The electrode monitoring system of claim 3, wherein
the graph is a line graph.

5. The electrode monitoring system of claim 1, wherein
the control part is configured to:
determine a region where the thickness of the positive electrode is 0.030 mm or less as an non-coated part, determine a region where the thickness of the positive electrode is greater than 0.030 mm and 0.090 mm or less as a single-side coated part, and determine a region wher e the thickness of the positive electrode is greater than 0.090 mm and 0.130 mm or less as a coated part; and
determine a region where the thickness of the negative electrode is 0.030 mm or less as an non-coated part, determine a region where the thickness of the negative electrode is greater than 0.030 mm and 0.090 mm or less as a single-side coated part, and determine a regionwhere the thickness of the negative electrode is greater than 0.090 mm and 0.130 mm or less as a coated part.

6. The electrode monitoring system of claim 1, wherein
the control part is configured to calculate the maximum value, minimum value, and average value of the thickness of the coated part of the positive electrode, and the maximum value, minimum value, and average value of the thickness of the coated part of the negative electrode.

7. The electrode monitoring system of claim 1, wherein
the control part is configured to:
divide the coated part of the positive electrode into a plurality of sections in the travel direction; and divide the coated part of the negative electrode into a plurality of sections in the travel direction.

8. The electrode monitoring system of claim 7, wherein
the display is configured to:
display, in a graph, the thickness of the negative electrode according to its position in the travel direction for each of the plurality of sections of the coated part of the negative electrode; and
display, in a graph, the thickness of the positive electrode according to its position in the travel direction for each of the plurality of sections of the coated part of the positive electrode.

9. The electrode monitoring system of claim 8, wherein
the display is configured to:
display the graphs for each of the plurality of sections of the coated part of the negative electrode superimposed on a single coordinate plane; and display the graphs for each of the plurality of sections of the coated part of the positive electrode superimposed on a single coordinate plane.

10. The electrode monitoring system of claim 7, wherein
the control part is configured to:
calculate the average value of the thickness of the negative electrode for each of the plurality of sections of the coated part of the negative electrode; and
calculate the average value of the thickness of the positive electrode for each of the plurality of sections of the coated part of the positive electrode.

11. The electrode monitoring system of claim 1, further comprising:
a memory configured to store data processed by the control part.

12. A secondary battery manufacturing device comprising:
a positive electrode unwinder that supplies a positive electrode;
a negative electrode unwinder that supplies a negative electrode;
a separator unwinder that supplies a separator;
a rewinder that winds the positive electrode, the separator, and the negative electrode;
a positive electrode sensor configured to measure the thickness of the positive electrode between the positive electrode unwinder and the rewinder;
a negative electrode sensor configured to measure the thickness of the negative electrode between the negative electrode unwinder and the rewinder;
a control part configured to process measurement data from the positive electrode sensor and the negative electrode sensor; and
a display connected to the control part and configured to display the measurement data.

13. The secondary battery manufacturing device of claim 12, wherein
the display is configured to:
display the thickness of the positive electrode according to the travel length of the positive electrode; and
display the thickness of the negative electrode according to the travel length of the negative electrode.

14. The secondary battery manufacturing device of claim 12, wherein
the control part is configured to:
divide the coated part of the positive electrode into a plurality of sections in the travel direction and calculate the average value of the thickness of the positive electrode in each of the plurality of sections; and
divide the coated part of the negative electrode into a plurality of sections in the travel direction and calculate the average value of the thickness of the negative electrode in each of the plurality of sections.

15. The secondary battery manufacturing device of claim 12, wherein
the control part is configured to:
calculate the maximum value, minimum value, and average value of the thickness of the coated part of the positive electrode; and
calculate the maximum value, minimum value, and average value of the thickness of the coated part of the negative electrode.
